(19) **Europäisches Patentamt**

**European Patent Office**

**Office européen des brevets**

(11) Veröffentlichungsnummer: **0 270 779**
**A1**

(12) **EUROPÄISCHE PATENTANMELDUNG**

(21) Anmeldenummer: **87115202.1**

(22) Anmeldetag: **17.10.87**

(51) Int. Cl.⁴: **H04B 3/14**

(30) Priorität: **03.11.86 DE 3637266**

(43) Veröffentlichungstag der Anmeldung:
**15.06.88 Patentblatt 88/24**

(84) Benannte Vertragsstaaten:
**DE FR GB IT**

(71) Anmelder: **Licentia Patent-Verwaltungs-GmbH**
**Theodor-Stern-Kai 1**
**D-6000 Frankfurt/Main 70(DE)**

(72) Erfinder: **Borowicz, Hans-Jörg, Dipl.-Ing.**
**Neuruppiner Strasse 205**
**D-1000 Berlin 37(DE)**

(74) Vertreter: **Schulze, Harald Rudolf, Dipl.-Ing. et al**
**Licentia Patent-Verwaltungs-GmbH**
**Theodor-Stern-Kai 1**
**D-6000 Frankfurt/Main 70(DE)**

(54) **Allpassschaltung zur Gruppenlaufzeitentzerrung.**

(57) Zur Gruppenlaufzeitentzerrrung, insbesondere für Bild-Ton-Vorstufen von Fernsehsendern, wird eine Allpaßschaltung mit zwei Umkehrverstärkern (V1, V2) vorgeschlagen. Im Gegenkopplungszweig des ersten Umkehrverstärkers (V1) liegt ein Schwingkreis, bestehend aus einer Induktivität (L2), einer durch eine Kapazitätsvariationsdiode veränderbaren Kapazität (C2) und einem aus einer PIN-Diode bestehenden steuerbaren Widerstand (R2). In Reihe zum Eingang ist ein zweiter steuerbarer Widerstand geschaltet und zwischen Ausgangs des ersten Verstärkers und Eingang des zweiten Verstärkers liegt ein mit eine zweiten Kapazitätsvariationsdiode (C3) parallelgeschalteter Widerstand. Eine unveränderbare Kopplung führt vom Eingang des zweiten Verstärkers zur Eingangsklemme des ersten Verstärkers. Der zweite Verstärker ist als Summierverstärker ausgebildet. Die Steuerströme für die PIN-Dioden stehen stets in einem konstanten Verhältnis, so daß bei der Einstellung in vorteilhafter Weise die Allpaßeigenschaft erhalten bleibt. Das Maximum der Gruppenlaufzeit wird durch die Steuerspannung für die Kapazitätsvariationsdiode des Schwingkreises variiert. Durch eine weitere Steuerspannung ist der erste Umkehrverstärker abschaltbar, so daß auch bei abgeschalteter Funktion der Allpaßschaltung deren Ausgangsspannung konstant bleibt.

FIG. 1

## Allpaßschaltung zur Gruppenlaufzeitentzerrung

Die Erfindung betrifft eine Allpaßschaltung zur Gruppenlaufzeitentzerrung gemäß dem Oberbegriff des Patentanspruchs 1.

Allpaßschaltungen zur Gruppenlaufzeitentzerrung enthalten einstellbare Kapazitäten, einstellbare Widerstände (Potentiometer) und einstellbare Induktivitäten. Zur Überprüfung des Abgleichs muß die jeweilige Allpaßschaltung ein-und abgeschaltet werden, das zum Beispiel durch Umstecken von Hilfssteckern erfolgt.

Der Erfindung liegt die Aufgabe zugrunde, den Stand der Technik zu verbessern. Insbesondere soll eine wenig Auf wand und Einstellzeit erfordernde Allpaßschaltung der im Oberbegriff des Patentanspruchs 1 genannten Art angegeben werden, mit der nach Möglichkeit ein automatischer Abgleich der Gruppenlaufzeitentzerrung durchgeführt werden kann.

Die Aufgabe wird durch die im Anspruch 1 genannte Erfindung gelöst.

Es ist nunmehr möglich, mit einer oder mehreren Allpaßschaltungen gemäß der Erfindung Gruppenlaufzeitentzerrer, insbesondere für Bild-Ton-Vorstufen von Fernsehsendern aufzubauen, die nur noch geringe Prüfkosten verursachen. Vorteilhafte Weiterbildungen und Ausgestaltungen sind in den Unteransprüchen angegeben. Die Ausgestaltung der Erfindung nach Anspruch 2 ermöglicht eine einfache elektrische Steuerung der zu variierenden Bauelementen der Allpaßschaltung. Die Ausgestaltung nach Anspruch 4 ist besonders zur Einstellung mehrgliedriger Allpaßketten vorteilhaft, da jede Allpaßschaltung gemessen und eingestellet werden muß. Die übrigen Allpaßschaltungen müssen dabei unwirksam sein. Zur Abschaltung der Allpaßfunktion ist bei der erfindungsgemäßen Allpaßschaltung lediglichlich eine Steuerspannung erforderlich. In vorteilhafter Weise bleibt bei der Abschaltung der Allpaßfunktion die Amplitude der Ausgangsspannung der Allpaßschaltung konstant.

Die Erfindung wird nun anhand eines in Zeichnungen dargestellten Ausführungsbeispiels näher erläutert. Es zeigen im einzelnen:

Fig. 1 Prinzipschaltbild der Allpaßschaltung gemäß der Erfindung

Fig. 2 ein Ausführungsbeispiel der Allpaßschaltung nach Fig. 1.

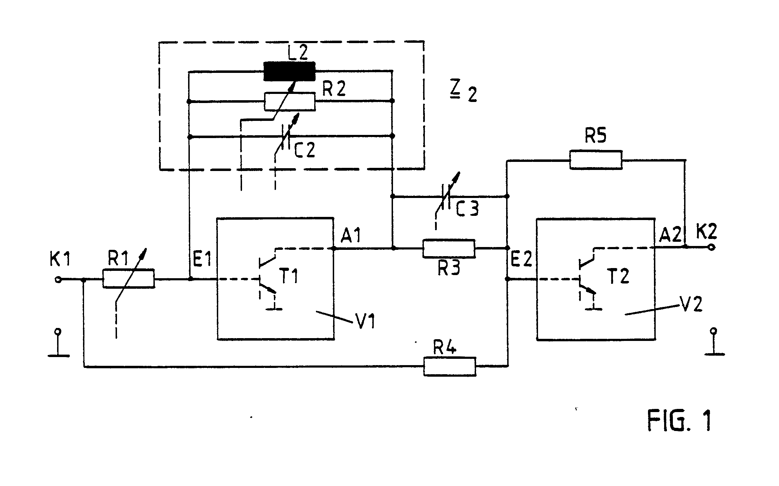

In Fig. 1 ist das Prinzip einer Allpaßschaltung, die z.B. als Element eines Gruppenlaufzeitentzerrers für Bild-Ton-Vorstufen von Fernsehsendern verwendet werden kann, dargestellt. Die Allpaßschaltung enthält zwei Umkehrverstärker V1 und V2, die beispielsweise jeweils durch einen Transistor T1 und T2, wie angedeutet, realisiert werden können.

Der Eingang E1 des Umkehrverstärkers V1 ist über einen elektrisch steuerbaren Widerstand R1 mit der Eingangsklemme K1 der Allpaßschaltung und über eine Parallelschaltung einer Induktivität L2, einer elektrisch steuerbaren Kapazität C2 und eines elektrisch steuerbaren Widerstandes R2 mit dem Ausgang A1 des Umkehrverstärkers V1 verbunden.

Der Ausgang A1 des Umkehrverstärkers V1 ist über einen Widerstand R3 mit dem Eingang E2 des Umkehrverstärkers V2 verbunden. Obwohl in der Regel ein rein ohmscher Widerstand verwendet werden kann, ist es gegebenenfalls zweckmäßig, durch eine parallel zum Widerstand R3 zu - schaltende elektrisch steuerbare Kapazität C3 den Einfluß unvermeidlicher Bauteiletoleranzen und Schaltungskapazitäten zu kompensieren.

Der Eingang E2 des Umkehrverstärkers V2 ist über einen Widerstand R4 mit der Eingangsklemme K1 der Allpaßschal tung und über einen Widerstand R5, der als Gegenkopplung, wirkt mit dem Ausgang A2 des Umkehrverstärkers V2 und mit der Ausgangsklemme K2 der Allpaßschaltung verbunden.

Zur Einstellung des Wertes für das Gruppenlaufzeitmaximum ist eine gekoppelte Veränderung der Widerstände R1 und R2 erforderlich. Zur Veränderung der Frequenz, bei der das Gruppenlaufzeitmaximum auftritt, ist die Kapazität C2 zu variieren.

Zur Senkung der Prüfkosten ist ein Rechner gestützter Abgleich eines Gruppenlaufzeitentzerrers der aus mehreren Allpaßschaltungen besteht wünschenswert. Voraussetzung dafür ist, daß alle Einstellungen über elektrische Größen (Spannung oder Strom) erfolgen können. Die Funktion der Allpässe soll außerdem einzeln überprüft werden können.

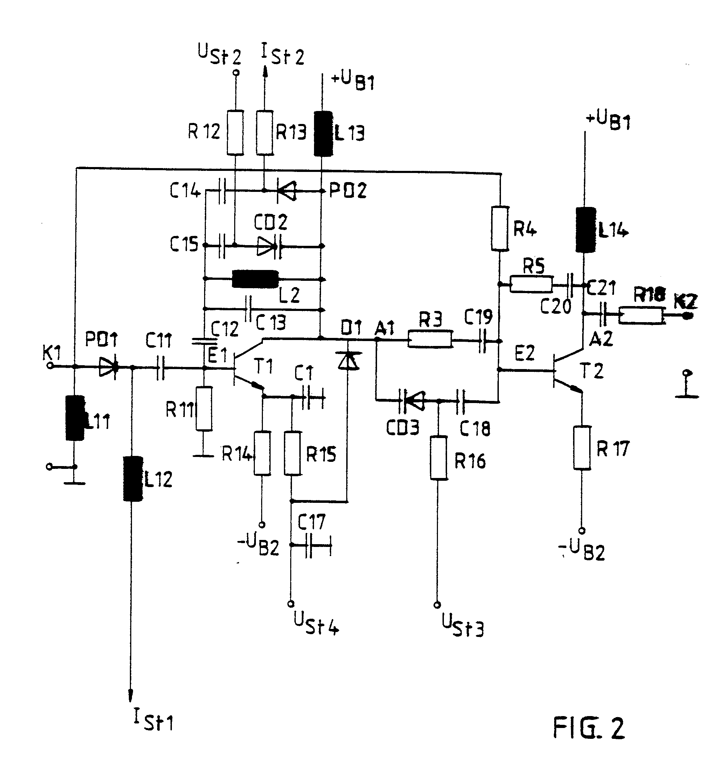

Fig. 2 zeigt ein vorteilhaftes Ausführungsbeispiel für eine elektrisch steuerbare Allpaßschaltung. Gleiche Bauelemente wie in Fig. 1 sind mit gleichen Bezugszeichen versehen. Die Umkehrverstärker V1 und V2 sind hier durch NPN-Transistoren T1 und T2 realisisert. Die Basis des Transistors T1 liegt über einen Widerstand R11 und die Basis des Transistors T2 über den Widerstand R4 und eine Hochfrequenz-Drossel L11 auf Bezugspotential. Zur galvanischen Trennung der Basispotentiale von weiteren Gleichspannungen dienen die Kondensatoren C11 und C12, die an die Basis des Transistors T1 angeschlossen sind, und die Kondensatoren C18, C19 und C20, die der Basis des Transistors T2 zugeordnet sind. Der Emitterstrom des Transistors T1 wird durch eine Betriebspannung $-U_{B2}$ und einen Emitterwiderstand R14 betimmt. Seine Kollekturspannung erhält der Transistor T1 über eine HF-Drossel L13 aus einer Betriebsspannung +$U_{B1}$. Entsprechend wird der Emitterstrom des Transistors T2 durch einen Emitterwiderstand R17 und die Betriebsspannung -$U_{B2}$ bestimmt und seine Kollektorspannung wird über eine mit der Betriebsspannung $U_{B1}$ verbundene HF-Drossel L14 zugeführt.

Die elektrisch steuerbaren Widerstände R1 und R2 auf Fig. 1 sind durch PIN-Dioden PD1 und PD2 und die elektrisch steuerbaren Kapazitäten C2 und C3 (Fig. 1) durch Kapazitätsvariationsdioden CD2 und CD3 realisiert. Die erforderlichen Steuerleitungen für die Steuerströme I $_{ST1}$ und $I_{ST2}$ der PIN-Dioden PD1 und PD2 und für die Steuerspannungen $U_{ST2}$ und $U_{ST3}$ der Kapazitätsvariationsdioden CD2 und CD3 sind mit einer an einen Rechner angeschlossenen hier nicht dargestellten Steuereinheit verbunden.

Die Durchlaßwiderstände der PIN-Dioden PD1 und PD2 werden durch die Steuerströme $I_{ST1}$ bzw. $I_{ST2}$ gesteuert. Die galvanische Entkopplung der PIN-Dioden erfolgt für die PIN-Diode PD1 durch die parallel zum Eingang K1 der Allpaßschaltung geschaltete HF-Drossel L11 und die durch den Kondensator C11 vom Eingang E1 des Transistors T1 getrennte HF-Drossel L12. Für die galvanische Entkopplung der PIN-Diode PD2 sorgt die HF-Drossel L13 und der durch den Kondensator C14 galvanisch getrennte hochohmige Widerstand R13.

Die Kapazität C2 der Impedanz Z2 (Fig. 1) wird mit Hilfe der Kapazitätsvariationsdiode CD2 (Fig. 2) verändert und der Phasenabgleich erfolgt über die Steuerung der Kapazitätsvariationsdiode CD3.

Die Kapazitätsvariationsdiode CD2 erhält ihre Steuerspannung $U_{ST2}$ über einen Widerstand R12. Die Steuerspannung ist galvanisch durch einen Kondensator C15 von der übrigen Schaltung getrennt. Zur Steuerung der Kapazitätsvariationsdiode CD3 ist eine Steuerspannung $U_{ST3}$ vorgesehen, die der Kapazitätsvariationsdiode CD3 durch einen Kondensator C18 galvanisch von der übrigen Schaltung getrennt, über einen Widerstand R16 zugeführt wird.

Eine wirtschaftliche Einstellung der Entzerrung mit Hilfe einer z.B. fünfgliedrigen Allpaßschaltungskette setzt voraus, daß jede Allpaßschaltung getrennt gemessen und dabei eingestellt werden kann. Die übrigen Allpässe müssen dabei unwirksam sein. Diese Einstellarbeiten werden erleichtert, wenn, wie im Ausführungsbeispiel der Fig. 2, die Signalamplitude an der Ausgangsklemme K2 der Schaltung bei der Abschaltung der Allpaßfunktion konstant bleibt.

Nach Fig. 2 wird die Funktion der Allpaßschaltung dadurch unwirksam gemacht, daß der Verstärker V1, realisiert im wesentlichen durch den Transistor T1, durch eine weitere Steuerspannung $U_{ST4}$ abgeschaltet werden kann. Die Basis des Transistors T1 ist hierzu über einen Widerstand R11 auf Bezugspotential gelegt. Der Emitter wird über einen Widerstand R15 und der Kollektor über eine Schaltdiode D1 mit der Steuerspannung $U_{ST4}$ verbunden.

Im Ausführungsbeispiel ist der Transistor T1 ein NPN-Transistor. Liegt die Steuerspannung $U_{ST4}$ auf Bezugspotential, so ist der über den Widerstand R15 fließende zusätzliche Emitterstrom praktisch vernachlässigbar und die Diode D1 ist gesperrt.

Eine positive Steuerspannung $U_{ST4}$ erhöht über den Widerstand R15 das Emitterpotential des Transistors T1, wodurch die Basis-Emitter-Strecke des Transistors T1 gesperrt wird. Außerdem bewirkt die positive Steuerspannung U $_{ST4}$, daß die Schaltdiode D1 leitend wird. Dadurch werden Signalanteile, die über die Impedanz Z2 (Fig. 1) an den Ausgang A1 des Transistors T1 gelangen, über die Diode D1 und die Kapazität C17 abgeleitet. Dadurch gelangt nur noch ein unbeeinflußtes Signal über den Widerstand R4 auf den Transistor T2 und damit auf den Ausgang A2. Besonders vorteilhaft bei dieser Abschaltmethode ist es, daß keine Schaltkontakte im Signalweg liegen und daß die Ausgangsspannung der Allpaßschaltung unabhängig vom Wert der Steuerspannung $U_{ST4}$ konstant bleibt.

Es müssen zwei Bedingungen erfüllt sein, wenn die Schaltung als reiner Allpaß arbeiten soll. Die Amplitudenbedingung verlangt, daß, wenn der Widerstand R2 verändert wird, um die Güte des Schwingkreises und damit den Wert des Gruppenlaufzeitmaximums zu verändern, daß dann gleichzeitig der Widerstand R1 verändert werden muß; denn das Verhältnis R1/R2 muß konstant bleiben. Dies wird in der Schaltung nach Fig. 2 dadurch erzielt, daß die Steuerströme $I_{ST1}$ und $I_{ST2}$ ebenfalls stets ein konstantes Verhältnis aufweisen. Infolge unvermeidlicher Bauteiletoleranzen kann es bisweilen zweckmäßig sein, das Verhältnis der Steuerströme bei der Einstellung geringfügig zu korrigieren, um ein optimales Übertragungsverhalten zu erzielen.

Die Phasenbedingung läßt sich durch die Veränderung der Kapazität der Kapazitätsvariationsdiode CD3 über die Steuerspannung $U_{ST3}$ erfüllen.

Die Resonanzfrequenz des aus der Induktivität L2 und der Kapazitätsvariationsdiode CD2, der, wie in Fig. 2 dargestellt, eine Festkapazität C13 parallel geschaltet sein kann, gebildeten Schwingkreises, wird mit der Steuerspannung $U_{ST2}$ verändert. Damit wird die Frequenz festgelegt, bei der das Gruppenlaufzeitmaximum auftritt.

**Ansprüche**

1. Allpaßschaltung zur Gruppenlaufzeitentzerrung insbesondere für Bild-Ton-Vorstufen von Fensehsendern gekennzeichnet durch die Kombination folgender Merkmale:
-die Allpaßschaltung enthält zwei Umkehrverstärker (V1, V2),
-der Eingang (E1) des ersten Umkehrverstärkers (V1) ist über einen elektrisch steuerbaren ersten Widerstand (R1) mit der Eingangsklemme (K1) der Allpaßschaltung und über eine Parallelschaltung einer Induktivität (L2), einer elektrisch steuerbaren Kapazität (C2) und eines elektrisch steuerbaren zweiten Widerstandes (R2) mit dem Ausgang (A1) des ersten Umkehrverstärkers (V1) verbunden,
-der Ausgang (A1) des ersten Umkehrverstärkers (V1) ist über einen dritten Widerstand (R3) mit dem Eingang (E2) des zweiten Umkehrverstärkers (V2) verbunden und
-der Eingang (E2) des zweiten Umkehrverstärkers (V2) ist über einen vierten Widerstand (R4) mit der Eingangsklemme (K1) der Allpaßschaltung und über einen fünften Widerstand (R5) mit dem Ausgang (A2) des zweiten Umkehrverstärkers (V2) und der Ausgangsklemme (K2) der Allpaßschaltung verbunden.

2. Schaltung nach Anspruch 1, dadurch gekennzeichnet, daß dem dritten Widerstand (R3) eine elektrisch steuerbare zweite Kapazität (C3) parallel geschaltet ist.

3. Schaltung nach Anspruch 1 oder 2, dadurch gekennzeichnet, daß die elektrisch steuerbaren Widerstände (R1, R2) durch PIN-Dioden (PD1, PD2) und die elektrisch steuerbaren Kapazitäten (C2, C3) durch Kapazitätsvariationsdioden (CD2, CD3) realisiert sind und die erforderlichen Steuerleitungen für die Steuerströme ($I_{St1}$, $I_{St2}$) der PIN-Dioden (PD1, PD2) und für die Steuerspannungen ($U_{ST2}$, $U_{St3}$) der Kapazitätsvariationsdioden (CD2, CD3) mit einer an einen Rechner angeschlossenen Steuereinheit verbunden sind.

4. Schaltung nach Anspruch 3, dadurch gekennzeichnet, daß der erste Umkehrverstärker (V1) durch eine weitere Steuerspannung ($U_{St4}$) abschaltbar ist.

5. Schaltung nach Anspruch 4, dadurch gekennzeichnet, daß der erste Umkehrverstärker (V1) als Transistor (T1) ausgebildet ist, dessen Basis über einen sechsten Widerstand (R11) mit Bezugspotential, dessen Emitter über einen siebten Widerstand (R15) und dessen Kollektur über eine Schaltdiode (D1) mit der weiteren Steuerspannung ($U_{St4}$) verbunden sind, wobei durch die Steuerspannung ($U_{St4}$) sowohl die Basis-Emitter-Strecke des Transistors (T1) sperrbar als auch die Schaltdiode (D1) leitend steuerbar ist.

6. Schaltung nach Anspruch 4 oder 5, dadurch gekennzeichnet, daß die Ausgangsspannung der Allpaßschaltung bei eingeschaltetem und abgeschaltetem ersten Umkehrverstärker (V1) konstant ist.

FIG. 1

FIG. 2

Europäisches Patentamt

**EUROPÄISCHER RECHERCHENBERICHT**

Nummer der Anmeldung

EP 87 11 5202

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 5, Nr. 44 (E-50)[716], 24. März 1981; & JP-A-56 734 (NIPPON DENKI K.K.) 07-01-1981 * Zusammenfassung * --- | 1 | H 04 B 3/14 |
| Y | US-A-4 356 460 (CUNNINGHAM) * Spalte 1, Zeilen 42-68 * --- | 1 | |
| Y | EP-A-0 086 463 (SIEMENS) * Seite 3, Zeile 28 - Seite 4, Zeile 22 * | 1 | |
| A | --- | 3 | |
| A | DE-A-3 306 762 (SIEMENS) * Seite 6, Zeile 29 - Seite 7, Zeile 12; Seite 8, Zeilen 35-37 * --- | 3 | |
| A | US-A-3 743 957 (FEISTEL) * Spalte 1, Zeilen 3-6; Spalte 3, Zeilen 10-30; Spalte 4, Zeilen 60-62 * ----- | 1 | |

RECHERCHIERTE SACHGEBIETE (Int. Cl.4)

H 04 B

Der vorliegende Recherchenbericht wurde für alle Patentansprüche erstellt

| Recherchenort | Abschlußdatum der Recherche | Prüfer |
|---|---|---|
| DEN HAAG | 28-01-1988 | HOLPER G.E.E. |